# EUROPEAN PATENT APPLICATION

(11) **EP 4 523 911 A1**
(43) Date of publication of application: **19.03.2025**
(21) Application number: 23803494.6
(22) Date of filing: 28.04.2023
(51) Int. Cl.: B32B 27/38, A23L 3/3526

(54) **OXYGEN ABSORBENT MATERIAL AND METHOD FOR STORING ARTICLE**

(30) Priority: 11.05.2022 JP 2022078084
(71) Applicant: MITSUBISHI GAS CHEMICAL COMPANY, INC., Chiyoda-ku Tokyo 100-8324 (JP)
(72) Inventor: KOBAYASHI Naoko, Hiratsuka-shi, Kanagawa 254-0016 (JP); KOUNO Kazuki, Hiratsuka-shi, Kanagawa 254-0016 (JP); NOHIRA Itsuki, Hiratsuka-shi, Kanagawa 254-0016 (JP)
(74) Representative: Gille Hrabal Partnerschaftsgesellschaft mbB Patentanwälte
(86) International application number: PCT/JP2023/016897
(87) International publication number: WO 2023/219016

(57) **Abstract**

Provided are: [1] an oxygen absorbent material containing a base material (I), an inorganic layer (II), and a cured product layer (III) of an epoxy resin composition containing an epoxy resin and an epoxy resin curing agent that includes an amine-based curing agent, where the inorganic layer (II) and the cured product layer (III) are adjacent to each other; and [2] a method for storing an article, the method including an aspect (1) in which the article is accommodated in a packaging material in which the oxygen absorbent material described in [1] is enclosed, and/or an aspect (2) in which the article is accommodated in a packaging material at least partially including the oxygen absorbent material described in [1], and the packaging material has an oxygen transmission rate of 1 cc/(m²•day•atm) or less.

## Description

### Technical Field

The present invention relates to an oxygen absorbent material and a method for storing an article.

### Background Art

As a technique for storing pharmaceuticals or the like, a storage technique involving use of an oxygen absorber is known. Specifically, such a storage technique suppresses oxidative deterioration, discoloration, and the like of an object to be stored by accommodating an oxygen absorber in a sealed package together with the object to be stored, creating an oxygen-free state inside the sealed package.

As the oxygen absorber, those composed of inorganic materials and those composed of organic materials have been proposed. Examples of the inorganic materials include inorganic materials that use a metal powder such as iron, a sulfite, a hydrogen sulfite, or a dithionite, and examples of the organic materials include organic materials that use L-ascorbic acid, erythorbic acid and salts thereof, sugars such as glucose, or reducing polyhydric alcohols such as catechol and pyrogallol.

Oxygen-absorbing resin compositions containing an improved oxygen absorber are also known. For example, Patent Document 1 discloses, as an oxygen-absorbing resin composition having an oxygen-absorbing capability even in an atmosphere containing no or little moisture, an oxygen-absorbing resin composition that includes: an oxygen absorber having a specific surface area of a predetermined value or greater as measured by the BET method and containing a metal obtained by subjecting an alloy containing aluminum and at least one transition metal selected from the group consisting of iron, cobalt, nickel and copper to an aqueous alkali solution treatment; and a thermoplastic resin, and the oxygen-absorbing resin composition having a moisture content of a predetermined value or less.

In addition, a technique has also been examined for improving a packaging material for an oxygen absorber that is attached to an inner surface of a center seal side of a packaging bag when a food product is pillow-packaged. For example, Patent Document 2 discloses an oxygen absorber that is obtained by enclosing an oxygen-absorbing composition containing iron powder or a reducing organic compound, an alkaline compound, and water in a packaging bag formed by thermocompression bonding the peripheral edges of a sheet formed by laminating predetermined packaging materials, where the stiffness value of the heat-sealed portion formed at the peripheral edges of the packaging bag by thermal bonding is in a predetermined range. Patent Document 2 also indicates that the oxygen absorber is less likely to fall off or damage a food product during the packaging step and exhibits an excellent food preservation effect.

### Citation List

### Patent Document

Patent Document 1: JP 2015-007148 A
Patent Document 2: JP 2016-140810 A

### Summary of Invention

### Technical Problem

Each of the oxygen absorbers disclosed in Patent Documents 1 and 2 contains a metal powder such as an iron powder or a reducing organic compound. Meanwhile, studies have also been conducted on materials having an oxygen-absorbing property suited for the storage of hydrous articles or the storage of articles under a high-humidity environment and which can be easily formed into a film using a novel material as an oxygen absorber without carrying out an operation such as kneading the oxygen absorber into the film.

The present invention addresses the issue of providing an oxygen absorbent material that is suited for storage of a hydrous article or for storage of an article under a high-humidity environment, and a method for storing an article using the oxygen absorbent material.

### Solution to Problem

The present inventors discovered that the above issue can be solved by providing an oxygen absorbent material having a specific structure including a base material, an inorganic layer, and a cured product layer of a predetermined epoxy resin composition.

That is, the present invention relates to the following:
[1] An oxygen absorbent material including: a base material (I); an inorganic layer (II); and a cured product layer (III) of an epoxy resin composition containing an epoxy resin and an epoxy resin curing agent that contains an amine-based curing agent, wherein the inorganic layer (II) and the cured product layer (III) are adjacent to each other.
[2] A method for storing an article using the oxygen absorbent material described in [1] above, the method including the following aspect (1) and/or (2):
   (1) The article is accommodated in a packaging material in which the oxygen absorbent material is enclosed.
   (2) The article is accommodated in a packaging material at least partially including the oxygen absorbent material, the packaging material having an oxygen transmission rate of 1 cc/(m²·day·atm) or less.
[3] Use of a laminate as an oxygen absorbent material, the laminate including: a base material (I); an inorganic layer (II); and a cured product layer (III) of an epoxy resin composition containing an epoxy resin and an epoxy resin curing agent that contains an amine-based curing agent, wherein the inorganic layer (II) and the cured product layer (III) are adjacent to each other.

### Advantageous Effects of Invention

According to the present invention, an oxygen absorbent material that is suited especially for storage of a hydrous article or for the storage of an article under a high-humidity environment, and a method for storing an article using the oxygen absorbent material can be provided.

### Brief Description of Drawings

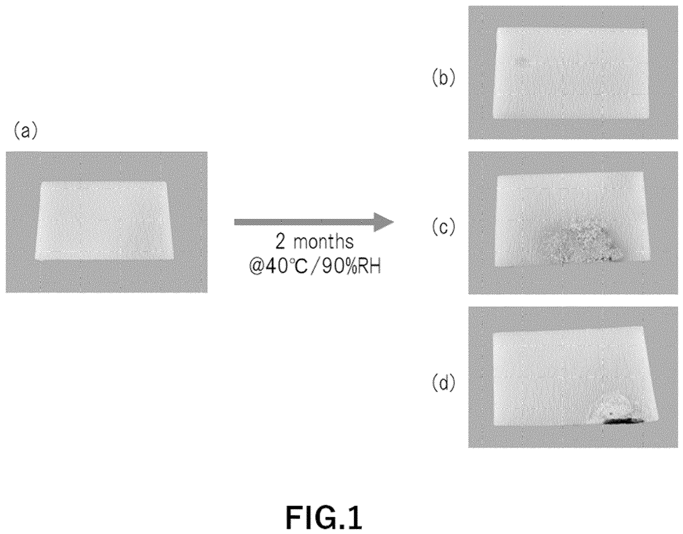

FIG. 1(a) is an appearance photograph of a cut rice cake (kiri-mochi) before storage, the cut rice cake used in Example 24 and Comparative Examples 2 and 3. FIGS. 1(b), (c), and (d) are appearance photographs of the cut rice cakes of Example 24, Comparative Example 2, and Comparative Example 3, respectively, after the cut rice cakes were placed in bag-shaped packaging materials, and the packaging materials were stored for two months under an environment having a temperature of 40°C and a relative humidity of 90%.

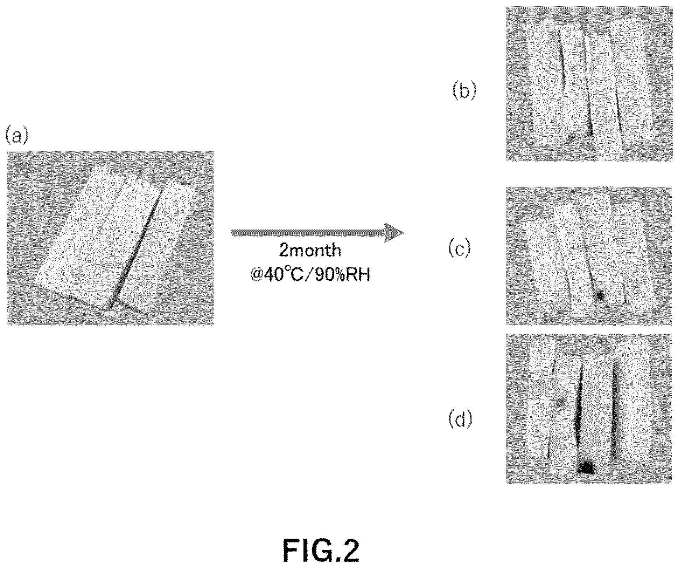

FIG. 2(a) is an appearance photograph before storage of cheese-tara, which is a cheese product sandwiched between two cod sheets, the cheese-tara used in Example 25 and Comparative Examples 4 and 5. FIGS. 2(b), (c), and (d) are appearance photographs of the cheese-tara of Example 25, Comparative Example 4, and Comparative Example 5, respectively, after being placed in bag-shaped packaging materials and stored for two months under an environment having a temperature of 40°C and a relative humidity of 90%.

### Description of Embodiments

### Oxygen Absorbent Material

An oxygen absorbent material of the present invention includes a base material (I), an inorganic layer (II), and a cured product layer (III) of an epoxy resin composition containing an epoxy resin and an epoxy resin curing agent that contains an amine-based curing agent, where the inorganic layer (II) and the cured product layer (III) are adjacent to each other. The oxygen absorbent material of the present invention has an oxygen-absorbing property and is particularly suitable for storage of a hydrous article.

The reason why the oxygen absorbent material of the present invention exhibits the abovementioned effect is not clear but is assumed to be as follows.

It is considered that the cured product layer (III) of the predetermined epoxy resin composition contained in the oxygen absorbent material of the present invention exhibits an oxygen-absorbing property when oxidized by being brought into contact with the inorganic layer (II). It is also considered that oxidation of the inorganic layer (II) also proceeds due to the influence of the adjacent cured product layer (III). Furthermore, since the inorganic layer (II) and the cured product layer (III) have not only an oxygen-absorbing property but also a gas barrier property, a packaging material obtained using the oxygen absorbent material of the present invention is suitable for storing articles that are susceptible to oxidative deterioration.

In particular, the present inventors discovered that manifestation of the oxygen-absorbing property of the cured product layer (III) due to contact with the inorganic layer (II) is triggered by moisture. Accordingly, the oxygen absorbent material of the present invention is suitable for storage of a hydrous article or storage of an article under a high-humidity environment.

The layer constitution of the oxygen absorbent material of the present invention is not particularly limited as long as the oxygen absorbent material has at least one layer each of the base material (I), the inorganic layer (II), and the cured product layer (III). However, from the viewpoint of exhibiting oxygen absorption performance, the inorganic layer (II) and the cured product layer (III) must be adjacent to each other. Moreover, from the viewpoint of exhibiting oxygen absorption performance and from the viewpoint of protecting the inorganic layer (II), the layer constitution of the oxygen absorbent material is preferably a configuration in which the base material (I), the inorganic layer (II), and the cured product layer (III) are provided in this order, and the inorganic layer (II) and the cured product layer (III) are adjacent to each other.

In addition, from the viewpoint of improving the strength of the oxygen absorbent material, the oxygen absorbent material preferably includes two or more base materials (I), and more preferably includes a base material (IA), the inorganic layer (II), the cured product layer (III), and a base material (IB) in this order.

### Base Material (I)

The base material (I) used in the oxygen absorbent material of the present invention is preferably a plastic film from the viewpoint of improving the oxygen-absorbing property and bending resistance.

Examples of the plastic film used as the base material (I) include polyolefin-based films, such as low density polyethylene, high density polyethylene, linear low density polyethylene, and polypropylene; polyester-based films, such polyethylene terephthalate, polyethylene naphthalate, and polybutylene terephthalate; polyamide-based films, such as nylon 6, nylon 6,6, and poly meta-xylene adipamide (N-MXD6); polyimide-based films; biodegradable films, such as polylactic acid films; polyacrylonitrile-based films; poly(meth)acrylic-based films; polystyrene-based films; polycarbonate-based films; ethylene-vinyl acetate copolymer saponified substance (EVOH)-based films, and polyvinyl alcohol-based films.

Among those described above, from the viewpoints of the oxygen-absorbing property, bending resistance, strength, and heat resistance, the base material (I) is preferably a film selected from the group consisting of a polyolefin-based film, a polyester-based film, a polyamide-based film, and a polyimide-based film, more preferably a film selected from the group consisting of a polyolefin-based film and a polyester-based film, and even more preferably a polypropylene film or a polyethylene terephthalate (PET) film.

The film described above may be an unstretched film, or may be stretched in a uniaxial direction or biaxial directions.

When the oxygen absorbent material has the base material (IA) and the base material (IB), the base material (IA) and the base material (IB) may be base materials composed of the same type of resin or base materials composed of different types of resins, but from the viewpoint of ease of recycling, the base material (IA) and the base material (IB) are preferably base materials composed of the same type of resin, and the base material (IA) and the base material (IB) are more preferably both polypropylene films.

The thickness of the base material (I) is not particularly limited and can be selected, as appropriate, in accordance with the application, but from the viewpoints of gas barrier properties and strength, the thickness is preferably from 5 to 300 µm, more preferably from 5 to 100 µm, and even more preferably from 10 to 60 µm. The thickness described above is the thickness of one sheet of the base material (I).

### Inorganic Layer (II)

The inorganic layer (II) used in the oxygen absorbent material of the present invention may be made of a metal foil or may be formed by a vapor deposition method. From the viewpoint of improving the oxygen-absorbing property, the inorganic layer (II) is preferably an inorganic vapor-deposited layer formed by a vapor deposition method.

The inorganic substance constituting the inorganic layer (II) is preferably an inorganic substance that can form an inorganic vapor-deposited layer, and examples include silicon, aluminum, magnesium, calcium, zinc, tin, nickel, titanium, zirconium, carbon, or oxides, carbides, nitrides, and oxynitrides thereof, and of these inorganic substances, one, or two or more can be used. Among these, from the viewpoint of improving the oxygen-absorbing property and the gas barrier property, and from the viewpoint of ease of forming the inorganic vapor-deposited layer, the inorganic layer (II) is preferably a silicon oxide (silica) vapor-deposited layer, an aluminum vapor-deposited layer, or an aluminum oxide (alumina) vapor-deposited layer, and from the viewpoint of improving the oxygen-absorbing property, the inorganic layer (II) is more preferably an aluminum vapor-deposited layer.

The thickness of the inorganic layer (II) is preferably 5 nm or greater from the viewpoint of improving the oxygen-absorbing property and the gas barrier property. Moreover, from the viewpoint of improving bending resistance, the thickness of the inorganic layer (II) is preferably 20 µm or less, and more preferably 10 µm or less, and when the inorganic layer (II) is an inorganic vapor-deposited layer, the thickness thereof is preferably 100 nm or less, and more preferably 50 nm or less. The thickness described above is the thickness per one layer of the inorganic layer (II).

The method for forming the inorganic layer (II) is not particularly limited, and as vapor deposition methods, examples include known vapor deposition methods including physical vapor deposition methods, such as a vacuum deposition method, a sputtering method, and an ion plating method; and chemical vapor deposition methods, such as a plasma chemical vapor deposition method, a thermal chemical vapor deposition method, and a photochemical vapor deposition method.

The inorganic layer (II) can be formed, for example, on the base material (I) or on the cured product layer (III).

### Cured Product Layer (III)

The cured product layer (III) that is used in the oxygen absorbent material of the present invention is a cured product of an epoxy resin composition containing an epoxy resin and an epoxy resin curing agent that contains an amine-based curing agent. Each component contained in the epoxy resin composition will be described below.

### Epoxy Resin

The epoxy resin used in the epoxy resin composition may be a saturated or unsaturated aliphatic compound or alicyclic compound, an aromatic compound, or a heterocyclic compound. In a case in which consideration is given to manifesting a high oxygen-absorbing property and a high gas barrier property, an epoxy resin containing an aromatic ring or an alicyclic structure in the molecule is preferred.

Specific examples of the epoxy resin include at least one type selected from an epoxy resin having a glycidylamino group derived from meta-xylylenediamine, an epoxy resin having a glycidylamino group derived from para-xylylenediamine, an epoxy resin having a glycidylamino group derived from 1,3-bis(aminomethyl) cyclohexane, an epoxy resin having a glycidylamino group derived from 1,4-bis(aminomethyl) cyclohexane, an epoxy resin having a glycidylamino group derived from diaminodiphenylmethane, an epoxy resin having a glycidylamino group and/or a glycidyloxy group derived from a para-aminophenol, an epoxy resin having a glycidyloxy group derived from bisphenol A, an epoxy resin having a glycidyloxy group derived from bisphenol F, an epoxy resin having a glycidyloxy group derived from a phenol novolac, and an epoxy resin having a glycidyloxy group derived from resorcinol. One of these epoxy resins can be used alone, or two or more can be used in combination.

Among those described above, from the viewpoint of improving the oxygen-absorbing property and the gas barrier property, the epoxy resin is preferably one having, as a main component, at least one component selected from the group consisting of an epoxy resin having a glycidylamino group derived from meta-xylylenediamine, an epoxy resin having a glycidylamino group derived from para-xylylenediamine, and an epoxy resin having a glycidyloxy group derived from bisphenol F, and is more preferably one having, as a main component, an epoxy resin having a glycidylamino group derived from meta-xylylenediamine.

Note that the term "main component" here means that other components may be included within a range that does not depart from the spirit of the present invention, and also means a component that is included in an amount of preferably from 50 to 100 mass%, more preferably from 70 to 100 mass%, and even more preferably from 90 to 100 mass%, relative to the total amount.

### Epoxy Resin Curing Agent Containing Amine-Based Curing Agent

The epoxy resin curing agent used in the epoxy resin composition contains an amine-based curing agent from the viewpoint of improving the oxygen-absorbing property and the gas barrier property.

As the amine-based curing agent, a polyamine, or a modified product thereof, which has been used as a known epoxy resin curing agent, can be used. From the viewpoint of improving the oxygen-absorbing property and the gas barrier property, the amine-based curing agent is preferably a modified product of a polyamine, and more preferably contains a reaction product of the following component (A) and component (B).
(A) At least one selected from the group consisting of meta-xylylenediamine and para-xylylenediamine.
(B) At least one selected from the group consisting of unsaturated carboxylic acids represented by the following General Formula (1) and derivatives thereof. 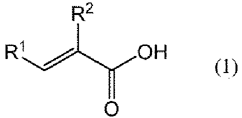 (In Formula (1), R¹ and R² each independently represent a hydrogen atom, an alkyl group having from 1 to 8 carbons, an aryl group having from 6 to 12 carbons, or an aralkyl group having from 7 to 13 carbons.)

From the viewpoint of improving the oxygen-absorbing property and the gas barrier property, the component (A) is preferably meta-xylylenediamine.
The component (B) is at least one selected from the group consisting of unsaturated carboxylic acids represented by General Formula (1) above and derivatives of the unsaturated carboxylic acids. Moreover, from the viewpoint of improving the oxygen-absorbing property and the gas barrier property, in General Formula (1), R¹ is preferably a hydrogen atom or an alkyl group having from 1 to 8 carbons, more preferably a hydrogen atom or an alkyl group having from 1 to 3 carbons, even more preferably a hydrogen atom or a methyl group, and yet even more preferably a hydrogen atom.

Furthermore, from the viewpoint of improving the oxygen-absorbing property and the gas barrier property, in General Formula (1), R² is preferably a hydrogen atom or an alkyl group having from 1 to 8 carbons, more preferably a hydrogen atom or an alkyl group having from 1 to 3 carbons, even more preferably a hydrogen atom or a methyl group, and yet even more preferably a hydrogen atom.

Examples of the derivatives of the unsaturated carboxylic acids represented by General Formula (1) above include esters, amides, acid anhydrides, and acid chlorides of the unsaturated carboxylic acids. The ester of the unsaturated carboxylic acid is preferably an alkyl ester, and from the viewpoint of achieving good reactivity, the alkyl has preferably from 1 to 6 carbons, more preferably from 1 to 3 carbons, and even more preferably 1 or 2 carbons.

Examples of the unsaturated carboxylic acids represented by General Formula (1) above and the derivatives thereof include unsaturated carboxylic acids, such as acrylic acid, methacrylic acid, α-ethylacrylic acid, α-propylacrylic acid, α-isopropylacrylic acid, α-n-butylacrylic acid, α-t-butylacrylic acid, α-pentylacrylic acid, α-phenylacrylic acid, α-benzylacrylic acid, crotonic acid, 2-pentenoic acid, 2-hexenoic acid, 4-methyl-2-pentenoic acid, 2-heptenoic acid, 4-methyl-2-hexenoic acid, 5-methyl-2-hexenoic acid, 4,4-dimethyl-2-pentenoic acid, 4-phenyl-2-butenoic acid, cinnamic acid, o-methyl cinnamic acid, m-methyl cinnamic acid, p-methyl cinnamic acid, and 2-octenoic acid; and esters, amides, acid anhydrides, and acid chlorides of these unsaturated carboxylic acids.

Among those described above, from the viewpoint of improving the oxygen-absorbing property and the gas barrier property, the component (B) is preferably at least one selected from the group consisting of acrylic acid, methacrylic acid, crotonic acid, and derivatives of these acids, is more preferably at least one selected from the group consisting of acrylic acid, methacrylic acid, crotonic acid, and alkyl esters of these acids, is even more preferably at least one selected from the group consisting of acrylic acid, methacrylic acid, and alkyl esters of these acids, is still more preferably an alkyl ester of an acrylic acid, and is yet even more preferably methyl acrylate.

When an unsaturated carboxylic acid, an ester, or an amide is used as the component (B), the reaction between the component (A) and the component (B) is carried out by mixing the component (A) and the component (B) at a temperature condition of from 0 to 100°C and more preferably from 0 to 70°C, and then carrying out, at a temperature condition of from 100 to 300°C and preferably from 130 to 250°C, a Michael addition reaction and an amide group formation reaction by dehydration, de-alcoholization, and deamination.

In this case, in the amide group formation reaction, to complete the reaction, the pressure inside a reaction device can be reduced at the final stage of the reaction as necessary. In addition, a non-reactive solvent can be used to dilute as necessary. Furthermore, a catalyst, such as a phosphite ester, can be added as a dehydrating agent or a dealcoholizing agent.

On the other hand, when an acid anhydride or an acid chloride of an unsaturated carboxylic acid is used as the component (B), the reaction is performed by mixing under a temperature condition of from 0 to 150°C and preferably from 0 to 100°C, and then carrying out the Michael addition reaction and the amide group formation reaction. In this case, in the amide group formation reaction, to complete the reaction, the pressure inside a reaction device can be reduced at the final stage of the reaction as necessary. In addition, a non-reactive solvent can be used to dilute as necessary. Furthermore, a tertiary amine, such as pyridine, picoline, lutidine, or trialkylamine, can be added.

The amide group moiety formed by the reaction between the component (A) and the component (B) has high cohesive force, and thus the cured product layer (III) formed using the epoxy resin curing agent that is the reaction product produced from the reaction between the component (A) and the component (B) exhibits an oxygen-absorbing property, a gas barrier property, and good adhesiveness.

A reaction molar ratio [(B)/(A)] of the component (B) to the component (A) is preferably in a range from 0.3 to 1.0. When the reaction molar ratio is 0.3 or greater, a sufficient amount of the amide groups is produced in the epoxy resin curing agent, and high levels of gas barrier properties and adhesiveness are exhibited. On the other hand, when the reaction molar ratio described above is in a range of 1.0 or less, the amount of amino groups necessary for reaction with the epoxy groups in the epoxy resin is sufficient, and excellent heat resistance and excellent solubility in organic solvents and water are exhibited.

From the viewpoint of the oxygen-absorbing property and gas barrier property of the obtained cured product layer (III), the above-described reaction molar ratio [(B)/(A)] of the component (B) to the component (A) is more preferably in a range from 0.6 to 1.0.

The amine-based curing agent described above may also be a reaction product of the component (A), the component (B), and at least one type of compound selected from the group consisting of the following component (C), component (D), and component (E).
(C) At least one selected from the group consisting of monovalent carboxylic acids represented by R³-COOH and derivatives thereof (where, R³ represents a hydrogen atom, an alkyl group having from 1 to 7 carbons and optionally having a hydroxyl group, or an aryl group having from 6 to 12 carbons)
(D) A cyclic carbonate
(E) A mono-epoxy compound having from 2 to 20 carbons

A monovalent carboxylic acid represented by R³-COOH or a derivative thereof, which is the component (C), is used as necessary from the viewpoints of reducing the reactivity between the epoxy resin curing agent and the epoxy resin and improving workability.

R³ represents a hydrogen atom, an alkyl group having from 1 to 7 carbons and optionally having a hydroxyl group, or an aryl group having from 6 to 12 carbons, and R³ is preferably an alkyl group having from 1 to 3 carbons or a phenyl group.

Examples of derivatives of the monovalent carboxylic acid represented by R³-COOH include esters, amides, acid anhydrides, and acid chlorides of the carboxylic acid. The ester of the carboxylic acid is preferably an alkyl ester, and the number of carbons of the alkyl is preferably from 1 to 6, more preferably from 1 to 3, and even more preferably 1 to 2.

Examples of the component (C) include monovalent carboxylic acids such as formic acid, acetic acid, propionic acid, butyric acid, lactic acid, glycolic acid, and benzoic acid, and derivatives thereof.

For the component (C), one type may be used alone, or two or more types may be used in combination.

The cyclic carbonate serving as the component (D) is used as necessary from the viewpoints of reducing the reactivity between the epoxy resin curing agent and the epoxy resin and improving workability, and is preferably a cyclic carbonate of a six-membered ring or less from the viewpoint of reactivity with the component (A). Examples include ethylene carbonate, propylene carbonate, glycerin carbonate, 1,2-butylene carbonate, vinylene carbonate, 4-vinyl-1,3-dioxolan-2-one, 4-methoxymethyl-1,3-dioxolan-2-one, and 1,3-dioxan-2-one. Among these, from the viewpoint of gas barrier properties, at least one selected from the group consisting of ethylene carbonate, propylene carbonate, and glycerin carbonate is preferable.

The mono-epoxy compound, which is the component (E), is a mono-epoxy compound having from 2 to 20 carbons, and is used as necessary from the viewpoints of reducing the reactivity between the epoxy resin curing agent and the epoxy resin and improving workability. From the viewpoint of gas barrier properties, the component (E) is preferably a mono-epoxy compound having from 2 to 10 carbons and is more preferably a compound represented by the following Formula (2). 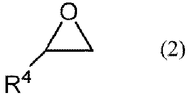 (In Formula (2), R⁴ represents a hydrogen atom, an alkyl group having from 1 to 8 carbons, an aryl group, or R⁵-O-CH₂-, and R*⁵* represents a phenyl group or a benzyl group.)

Examples of the mono-epoxy compound represented by Formula (2) above include ethylene oxide, propylene oxide, 1,2-butylene oxide, styrene oxide, phenylglycidyl ether, and benzylglycidyl ether. For the component (E), one type may be used alone, or two or more types may be used in combination.

In a case in which the component (C), the component (D), or the component (E) is used in the amine-based curing agent described above, any one type of a compound selected from the group consisting of the component (C), the component (D), and the component (E) may be used alone, or a combination of two or more types may be used.

Note that the amine-based curing agent described above may be a reaction product that is formed by reacting, in addition to the components (A) to (E), another component within a scope that does not hinder the effect of the present invention. Examples of the other component referred to here include aromatic dicarboxylic acids or derivatives thereof.

However, the usage amount of the "other component" is preferably 30 mass% or less, more preferably 10 mass% or less, and even more preferably 5 mass% or less, of the total amount of the reaction components constituting the amine-based curing agent described above.

The reaction product of the component (A) and the component (B) and the at least one type of compound selected from the group consisting of the component (C), the component (D), and the component (E) is produced by using at least one type of compound selected from the group consisting of the component (C), the component (D), and the component (E) in combination with the component (B) and reacting this combination with the component (A), which is a polyamine compound. The reaction may be carried out by adding the components (B) to (E) in any order and reacting with the component (A), or by mixing the components (B) to (E) and then reacting the mixture with the component (A).

The reaction between the component (A) and the component (C) can be carried out under the same conditions as those of the reaction between the component (A) and the component (B). In a case in which the component (C) is used, the component (B) and the component (C) may be mixed and then reacted with the component (A), or the component (A) and the component (B) may be first reacted and then further reacted with the component (C).

On the other hand, in a case in which the component (D) and/or the component (E) is used, preferably, the component (A) and the component (B) are first reacted, and then further reacted with the component (D) and/or the component (E).

The reaction between the component (A) and the component (D) and/or the component (E) is carried out by mixing the component (A) and the component (D) and/or the component (E) under the condition of a temperature from 25 to 200°C, and then implementing an addition reaction under the condition of a temperature from 30 to 180°C, and preferably from 40 to 170°C. Furthermore, as necessary, a catalyst such as sodium methoxide, sodium ethoxide, and potassium t-butoxide can be used.

When the reaction described above is to be carried out, as necessary, the component (D) and/or the component (E) may be melted or diluted with a non-reactive solvent and used to facilitate the reaction.

Also in a case in which the amine-based curing agent described above is a reaction product of the component (A) and the component (B), and at least one type of compound selected from the group consisting of the component (C), the component (D), and the component (E), the reaction molar ratio [(B)/(A)] of the component (B) to the component (A) is, for the same reason as described above, preferably in a range from 0.3 to 1.0, and more preferably in a range from 0.6 to 1.0. Meanwhile, the reaction molar ratio [{(C) + (D) + (E)}/(A)] of the component (C), the component (D), and the component (E) to the component (A) is preferably in a range from 0.05 to 3.1, more preferably in a range from 0.07 to 2.5, and even more preferably in a range from 0.1 to 2.0.

However, from the viewpoints of the oxygen-absorbing property, the gas barrier property, and coating performance, the reaction molar ratio [{ (B) + (C) + (D) + (E)}/(A)] of the components (B) to (E) to the component (A) is preferably in a range from 0.35 to 2.5, and more preferably in a range from 0.35 to 2.0.

From the viewpoints of improving the oxygen-absorbing property, the gas barrier property, and adhesiveness, the amine-based curing agent that is the reaction product of the component (A) and the component (B) is preferably a reaction product that is obtained by reacting only the component (A) and the component (B), and is more preferably a reaction product that is obtained by reacting only meta-xylylenediamine and an alkyl acrylate.

From the viewpoint of improving the oxygen-absorbing property, the gas barrier property, and adhesiveness, the content of the reaction product between the component (A) and the component (B) in the amine-based curing agent is preferably 50 mass% or more, more preferably 70 mass% or more, even more preferably 80 mass% or more, and yet even more preferably 90 mass% or more, and is 100 mass% or less.

The epoxy resin curing agent used in the present invention may contain a curing agent component besides the amine-based curing agent, but from the viewpoint of improving the oxygen-absorbing property and the gas barrier property, the content of the amine-based curing agent is preferably large. From the viewpoint of improving the oxygen-absorbing property and the gas barrier property, the content of the amine-based curing agent in the epoxy resin curing agent is preferably 50 mass% or more, more preferably 70 mass% or more, even more preferably 80 mass% or more, and yet even more preferably 90 mass% or more, and is 100 mass% or less.

The compounding ratio of the epoxy resin and the epoxy resin curing agent in the epoxy resin composition may be within the standard compounding range that is ordinarily used for a case in which an epoxy resin reaction product is produced through a reaction between an epoxy resin and an epoxy resin curing agent. Specifically, the ratio of (the number of active hydrogens in the epoxy resin curing agent)/(the number of epoxy groups in the epoxy resin), which is the ratio of the number of active hydrogens in the epoxy resin curing agent to the number of epoxy groups in the epoxy resin is preferably in a range from 0.2 to 12.0. From the viewpoint of improving the oxygen-absorbing property, the gas barrier property, and adhesiveness, the value of (the number of active hydrogens in the epoxy resin curing agent)/(the number of epoxy groups in the epoxy resin) is more preferably in a range of from 0.2 to 10.0, even more preferably from 0.2 to 8.0, yet even more preferably from 0.5 to 6.0, still more preferably from greater than 1.0 and 5.0 or less, yet even more preferably from 1.1 to 5.0, still more preferably from 2.0 to 5.0, yet even more preferably from 3.0 to 5.0, and still even more preferably from 3.5 to 5.0.

From the viewpoint of improving adhesiveness of the resulting cured product layer (III) to the inorganic layer (II), the epoxy resin composition may further contain a coupling agent. Examples of the coupling agent include a silane coupling agent, a titanate-based coupling agent, and an aluminate-based coupling agent, and a silane coupling agent is preferable.

Examples of the silane coupling agent include a silane coupling agent having a vinyl group, a silane coupling agent having an amino group, a silane coupling agent having an epoxy group, a silane coupling agent having a (meth)acryl group, and a silane coupling agent having a mercapto group. Among these, the silane coupling agent is preferably at least one selected from the group consisting of a silane coupling agent having an amino group and a silane coupling agent having an epoxy group, from the viewpoint of improving the adhesiveness of the resulting cured product layer (III) to the inorganic layer (II).

When a coupling agent is used, the content of the coupling agent in the epoxy resin composition is preferably from 0.1 to 10 parts by mass, and more preferably from 1 to 8 parts by mass, per 100 parts by mass of the epoxy resin curing agent.

The epoxy resin composition may contain, as necessary, an additive, such as a thermosetting resin, a wetting agent, a tackifier, an antifoaming agent, a curing accelerator, an antirust additive, a pigment, and an oxygen scavenger, within a range that does not impair the effects of the present invention.

When additives are used, the total content of the additives in the epoxy resin composition relative to 100 parts by mass of the total amount of the epoxy resin and the epoxy resin curing agent is preferably 20.0 parts by mass or less and more preferably from 0.001 to 15.0 parts by mass.

However, from the viewpoint of achieving the effects of the present invention, the total content of the epoxy resin and the epoxy resin curing agent in the solid content of the epoxy resin composition is preferably 60 mass% or more, more preferably 70 mass% or more, even more preferably 80 mass% or more, and yet even more preferably 85 mass% or more, and is 100 mass% or less. The "solid content of the epoxy resin composition" means components excluding the water and organic solvent in the epoxy resin composition.

The epoxy resin composition may contain an organic solvent, and the organic solvent is preferably a non-reactive solvent. Specific examples of the organic solvent include a protic polar solvent, such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol, as well as ethyl acetate, butyl acetate, methyl isobutyl ketone, and toluene; one type of these may be used alone, or two or more types may be used in combination.

Among those described above, from the viewpoint of improving the drying speed, at least one selected from the group consisting of methanol, ethanol, and ethyl acetate is preferred.

From the viewpoint of exhibiting an even higher adhesiveness of the resulting cured product layer (III), a content of a lubricant is preferably small in the epoxy resin composition. Specifically, the content of the lubricant in the epoxy resin composition is preferably less than 10 parts by mass, more preferably less than 5 parts by mass, even more preferably less than 2 parts by mass, yet even more preferably less than 1 part by mass, yet even more preferably less than 0.1 parts by mass, yet even more preferably less than 0.01 parts by mass, and yet even more preferably 0 parts by mass, relative to the 100 parts by mass of the total amount of the epoxy resin and the epoxy resin curing agent in the epoxy resin composition.

The lubricant described above contains, in addition to a known component as a lubricant, an unsaturated fatty acid amide having from 14 to 24 carbons, such as erucamide and oleamide.

From the viewpoint of exhibiting an even higher adhesiveness of the resulting cured product layer (III), a content of a filler, such as an organic or inorganic powder or an organic or inorganic fiber, is preferably small in the epoxy resin composition. Specifically, the content of the filler in the epoxy resin composition is preferably less than 10 parts by mass, more preferably less than 5 parts by mass, even more preferably less than 2 parts by mass, yet even more preferably less than 1 part by mass, yet even more preferably less than 0.1 parts by mass, yet even more preferably less than 0.01 parts by mass, and yet even more preferably 0 parts by mass, relative to the 100 parts by mass of the total amount of the epoxy resin and the epoxy resin curing agent in the epoxy resin composition.

The epoxy resin composition can be prepared, for example, by blending predetermined amounts of each of the epoxy resin, the epoxy resin curing agent, and the additives and solvent that are used as necessary, and then stirring and mixing using a well-known method and apparatus.

The method for forming the cured product layer (III) by curing the epoxy resin composition will be described later in the description of the method for producing the oxygen absorbent material.

From the viewpoint of improving the oxygen-absorbing property and the gas barrier property, the thickness of the cured product layer (III) is preferably 0.1 µm or more, more preferably 0.5 µm or more, even more preferably 1 µm or more and still more preferably 1.5 µm or more. In addition, from the viewpoint of improving adhesiveness, the thickness of the cured product layer (III) is preferably 20 µm or less, more preferably 10 µm or less, and even more preferably 5 µm or less. The thickness described above is the thickness of one layer of the cured product layer (III).

The oxygen absorbent material of the present invention may have an optional layer such as an adhesive layer, a primer layer, an ink layer, or a surface protection layer in addition to the base material (I), the inorganic layer (II), and the cured product layer (III). However, the inorganic layer (II) and the cured product layer (III) must be adjacent to each other, and an optional layer must not be included between the inorganic layer (II) and the cured product layer (III).

Since the oxygen absorbent material of the present invention exhibits an oxygen-absorbing property due to the inorganic layer (II) and the cured product layer (III), the oxygen absorbent material preferably does not have an oxygen-absorbing layer other than the inorganic layer (II) and the cured product layer (III). Examples of the oxygen-absorbing layer include a polyamide resin layer containing a polyamide resin and a transition metal. The transition metal refers to elements of Groups 3 to 11 in the periodic table, and is generally a compound that is in the form of an inorganic acid salt, an organic acid salt, or a complex salt and promotes oxygen absorption performance by being contained in a polyamide resin layer. Such transition metals include cobalt, copper, cerium, manganese, iron, chromium, and nickel.

In addition, preferably, none of the layers configuring the oxygen absorbent material of the present invention contain the transition metal. Specifically, the total content of transition metals in the oxygen absorbent material of the present invention is preferably less than 5 ppm, more preferably less than 3 ppm, even more preferably less than 1 ppm, and yet even more preferably less than 0.1 ppm.

The total thickness of the oxygen absorbent material varies depending on the layer constitution, but from the viewpoint of improving the oxygen-absorbing property and the gas barrier property, the total thickness thereof is preferably from 6 to 600 µm, more preferably from 10 to 500 µm, even more preferably from 20 to 300 µm, and yet even more preferably from 20 to 200 µm.

### Method for Producing Oxygen Absorbent Material

The method for producing the oxygen absorbent material of the present invention is not particularly limited, and a known method can be used.

Examples of the method for producing an oxygen absorbent material obtained by laminating the base material (I), the inorganic layer (II), and the cured product layer (III) in this order include a method of forming the inorganic layer (II) on one side of the base material (I), applying, at a desired thickness, the epoxy resin composition onto the inorganic layer (II), and then curing the epoxy resin composition to form the cured product layer (III). Note that when a film having an inorganic layer (II) formed in advance on a base material (I) is used, the cured product layer (III) may be formed on the inorganic layer (II) thereof.

Examples of a method for producing an oxygen absorbent material in which a base material (IA), an inorganic layer (II), a cured product layer (III), and a base material (IB) are laminated in this order include a method in which the inorganic layer (II) is formed on one side of the base material (IA), and the epoxy resin composition is applied onto the inorganic layer (II) to a desired thickness, after which the coated surface is bonded to the base material (IB), and subsequently the epoxy resin composition is cured to form the cured product layer (III).

Examples of the application method for applying the epoxy resin composition include bar coating, Meyer bar coating, air knife coating, gravure coating, reverse gravure coating, micro gravure coating, micro reverse gravure coating, die coating, slot die coating, vacuum die coating, dip coating, spin coating, roll coating, spray coating, and coating with a brush. Among these, bar coating, roll coating, or spray coating is preferred, and gravure coating, reverse gravure coating, micro gravure coating, or micro reverse gravure coating is industrially preferred.

After the epoxy resin composition has been applied by coating, a step (drying step) of volatilizing the solvent is implemented as necessary. Conditions in the drying step can be appropriately selected, and, for example, the drying can be implemented at a drying temperature of from 60 to 180°C and a drying time of from 5 to 180 seconds.

After the drying step has been carried out, the epoxy resin composition is cured to form the cured product layer (III). The curing temperature can be selected, for example, in a range of from 10 to 140°C, and is preferably in a range from 10 to 80°C. The curing time can be selected, for example, in a range of from 0.5 to 200 hours, and is preferably in a range of from 2 to 100 hours.

### Properties of Oxygen Absorbent Material

The oxygen absorbent material of the present invention has an oxygen-absorbing property and excellent gas barrier properties. For example, the oxygen transmission rate of the oxygen absorbent material at 23°C and a relative humidity of 60% varies depending on the barrier properties of the base material (I) and inorganic layer (II) that are used, but is preferably 1 cc(m²•day•atm) or less, more preferably 0.8 cc/(m²•day•atm) or less, even more preferably 0.6 cc/(m²•day•atm) or less, and still more preferably 0.3 cc/(m²•day•atm) or less.

The oxygen transmission rate of the oxygen absorbent material can be measured specifically by the method described in the Examples.

### Shape and Usage Mode of Oxygen Absorbent Material

The shape of the oxygen absorbent material of the present invention can be appropriately selected according to the usage mode, and may be, for example, a sheet shape or a bag shape. Examples of the usage mode of the oxygen absorbent material include a method in which a film-shaped oxygen absorbent material is enclosed in a packaging material such as a container or a packaging bag and then used, and a method in which the oxygen absorbent material is used as a packaging material.

### Article Storage Method

A method for storing an article according to the present invention is a method of storing an article using the oxygen absorbent material, and the method includes the following aspect (1) and/or aspect (2).
(1) The article is accommodated in a packaging material in which the oxygen absorbent material is enclosed.
(2) The article is accommodated in a packaging material at least partially including the oxygen absorbent material, the packaging material having an oxygen transmission rate of 1 cc/(m²·day·atm) or less.

The oxygen absorbent material has an oxygen-absorbing property, and therefore according to the method of the present invention for storing an article (hereinafter, also simply referred to as the "method of the present invention"), oxidative degradation of the article to be stored can be effectively suppressed.

In aspect (1), the article is accommodated in a packaging material in which the oxygen absorbent material is enclosed.

The shape of the oxygen absorbent material that is used in aspect (1) may be any shape that can be enclosed in a packaging material, but is preferably a sheet shape. The oxygen absorbent material may be affixed to the inside of the packaging material, or may be enclosed in the packaging material in a state of being accommodated in a packaging bag.

The form of the packaging material used in aspect (1) described above can be selected, as appropriate, according to the article to be contained and stored, and examples of the form thereof include: packaging films; packaging containers such as packaging bags and bottles; and lid materials and sealing materials for packaging containers. Specific examples of packaging films or packaging bags include: three-side sealed flat bags; standing pouches; gusset packaging bags; pillow packaging bags; multi-chamber pouches containing a main chamber and a secondary chamber and provided with a releasable wall between the main chamber and the secondary chamber; and shrink film packaging. The thickness and volume of the packaging material are also not particularly limited, and can be selected, as appropriate, according to the article to be stored.

The material of the packaging material used in aspect (1) described above is not particularly limited, but is preferably a packaging material having a gas barrier property. For example, when the packaging material is a packaging bag, examples thereof include a packaging bag made of aluminum and a packaging bag in which is used a plastic base material having a transparent vapor-deposited layer.

In aspect (2) described above, the article is accommodated in a packaging material at least partially including the oxygen absorbent material, and the packaging material has an oxygen transmission rate of 1 cc/(m²·day·atm) or less. From the viewpoint of effectively suppressing oxidative deterioration of the article, the packaging material is preferably a packaging material made from the oxygen absorbent material.

The oxygen transmission rate of the packaging material used in aspect (2) described above is a value measured at a temperature of 23°C and a relative humidity of 60% by the method described in the Examples, and is preferably 0.8 cc/(m²·day·atm) or less, more preferably 0.6 cc/(m²·day·atm) or less, and even more preferably 0.3 cc/(m²·day·atm) or less.

From the viewpoint of at least partially including the oxygen absorbent material, the form of the packaging material used in aspect (2) is preferably a packaging film or a packaging bag, and specific examples thereof are the same as those described with regard to aspect (1). The thickness and volume of the packaging material are also not particularly limited, and can be selected, as appropriate, according to the article to be stored.

The method of the present invention may be a method including aspects (1) and (2).

Examples of articles to be stored by the method of the present invention include food products, beverages, seasonings, chemicals, pharmaceuticals, cosmetics, pet foods, and detergents. From the viewpoint of enhancing the oxygen-absorbing property of the oxygen absorbent material due to moisture acting as a trigger, the article preferably contains water.

For example, when the article to be stored is a food product, from the viewpoint of enhancing the oxygen-absorbing property of the oxygen absorbent material triggered by moisture, the water activity (Aw) of the food product is preferably 0.75 or more, more preferably 0.80 or more, even more preferably 0.85 or more, yet even more preferably 0.90 or more, and still even more preferably 0.95 or more. Here, the water activity Aw of a food product is defined as the ratio of the vapor pressure P of water in a closed system containing the food product to the vapor pressure PO of pure water at that temperature, that is, Aw = P/PO.

The water activity Aw of a food product is represented by Aw = RH/100, where RH (%) is the relative humidity in a closed system containing the food product.

In the method of the present invention, from the viewpoint of enhancing the oxygen-absorbing property of the oxygen absorbent material, the temperature in the packaging material containing the article is preferably 5°C or higher, more preferably 10°C or higher, and even more preferably 25°C or higher, and is usually 80°C or lower.

Alternatively, in the method of the present invention, the packaging material containing the article is stored in an environment having a temperature of preferably 5°C or higher, more preferably 10°C or higher, and further preferably 25°C or higher, and usually 80°C or lower.

In the method of the present invention, from the viewpoint of enhancing the oxygen-absorbing property of the oxygen absorbent material, the relative humidity in the packaging material containing the article is preferably 85% or higher, more preferably 90% or higher, and even more preferably 95% or higher, and is 100% or lower.

Alternatively, in the method of the present invention, the packaging material containing the article is stored in an environment having a relative humidity of preferably 85% or higher, more preferably 90% or higher, and even more preferably 95% or higher, and 100% or lower.

### Usage

The present invention further provides use of a laminate as an oxygen absorbent material, the laminate including a base material (I), an inorganic layer (II), and a cured product layer (III) of an epoxy resin composition containing an epoxy resin and an epoxy resin curing agent that contains an amine-based curing agent, where the inorganic layer (II) and the cured product layer (III) are adjacent to each other.

The details and preferred embodiments of the base material (I), the inorganic layer (II), the cured product layer (III), and the laminate are the same as those described for the oxygen absorbent material.

### Examples

Next, the present invention will be described specifically with reference to examples. However, the present invention is not limited in any way by these examples.

Measurements and evaluations in the present examples were performed by the following methods.

### Thickness of Cured Product Layer

The thickness was measured using a multilayer film thickness measuring device ("DC-8200" available from Gunze Limited).

### Oxygen Absorption Amount (cc/g)

A film-shaped oxygen absorbent material obtained in each example was cut to prepare four narrow strip-shaped test pieces measuring 5 cm × 15 cm. The test pieces were inserted into an aluminum bag measuring approximately 21 cm × 15 cm, 200 cc of air was enclosed in the bag, and the inside of the bag was subjected to moisture control so as to have the humidity level described in the tables, after which the bag was sealed. The aluminum bag was stored for a predetermined time period at the temperature indicated in the table, after which the concentration of oxygen in the bag was measured with a zirconia-type oxygen concentration measuring device ("LC-750F" available from Toray Engineering Co., Ltd.), and the oxygen absorption amount per one oxygen absorbent material was calculated.

### Production Example 1 (Preparation of Epoxy Resin Curing Agent Solution A)

A reaction container was charged with 1 mol of meta-xylylenediamine (MXDA). The temperature was increased to 60°C under a nitrogen stream, and 0.93 mol of methyl acrylate was added dropwise over 1 hour. The temperature was increased to 165°C while generated methanol was distilled off, and the temperature was then maintained at 165°C for 2.5 hours, and thereby an amine-based curing agent was obtained. To this, methanol was added dropwise over 1.5 hours, after which 3-aminopropyltriethoxysilane ("KBE-903", available from Shin-Etsu Chemical Co., Ltd.) was added as a silane coupling agent, and an epoxy resin curing agent solution A containing 62.2 mass% of the amine-based curing agent, 2.8 mass% of 3-aminopropyltriethoxysilane, and 35 mass% of methanol was obtained.

### Production Example 2 (Preparation of Epoxy Resin Composition A)

Amounts of 2.15 g of methanol and 3.25 g of ethyl acetate were added as diluting solvents, and the mixture was stirred well. Next, 3.13 g of the epoxy resin curing agent solution A obtained in Production Example 1 was added, and the mixture was stirred. To this mixture, as an epoxy resin, 1.46 g of an epoxy resin ("TETRAD-X", available from Mitsubishi Gas Chemical Co., Inc.) having a glycidylamino group derived from meta-xylylenediamine [(the number of active hydrogens in the epoxy resin curing agent)/(the number of epoxy groups in the epoxy resin) = 0.8] was added and stirred, and thereby an epoxy resin composition A was prepared.

### Production Example 3 (Preparation of Epoxy Resin Composition B)

An epoxy resin composition B was prepared by the same method as Production Example 2 with the exception that in Production Example 2, the blending amount of the methanol used as a diluting solvent was changed to 1.98 g, the blending amount of the epoxy resin curing agent solution A obtained in Production Example 1 was changed to 3.64g, and the blending amount of the epoxy resin ("TETRAD-X", available from Mitsubishi Gas Chemical Co., Inc.) having a glycidylamino group derived from meta-xylylenediamine was changed to 1.13 g [(the number of active hydrogens in the epoxy resin curing agent)/(the number of epoxy groups in the epoxy resin) = 1.2].

### Production Example 4 (Preparation of Epoxy Resin Composition C)

An epoxy resin composition C was prepared by the same method as Production Example 2 with the exception that in Production Example 2, the blending amount of the methanol used as a diluting solvent was changed to 1.56 g, the blending amount of the epoxy resin curing agent solution A obtained in Production Example 1 was changed to 4.83 g, and the blending amount of the epoxy resin ("TETRAD-X", available from Mitsubishi Gas Chemical Co., Inc.) having a glycidylamino group derived from meta-xylylenediamine was changed to 0.36 g [(the number of active hydrogens in the epoxy resin curing agent)/(the number of epoxy groups in the epoxy resin) = 5.0].

### Production Example 5 (Preparation of Epoxy Resin Composition D)

An epoxy resin composition D was prepared by the same method as Production Example 2 with the exception that in Production Example 2, the blending amount of the methanol used as a diluting solvent was changed to 3.62 g, the blending amount of ethyl acetate was changed to 4.30 g, the blending amount of the epoxy resin curing agent solution A obtained in Production Example 1 was changed to 1.93 g, and the blending amount of the epoxy resin ("TETRAD-X", available from Mitsubishi Gas Chemical Co., Inc.) having a glycidylamino group derived from meta-xylylenediamine was changed to 0.14 g [(the number of active hydrogens in the epoxy resin curing agent)/(the number of epoxy groups in the epoxy resin) = 5.0].

### Production Example 6 (Preparation of Epoxy Resin Composition E)

An epoxy resin composition E was prepared by the same method as Production Example 2 with the exception that in Production Example 2, the blending amount of the methanol used as a diluting solvent was changed to 2.47 g, the blending amount of the epoxy resin curing agent solution A obtained in Production Example 1 was changed to 2.20 g, and instead of the epoxy resin ("TETRAD-X", available from Mitsubishi Gas Chemical Co., Inc.) having a glycidylamino group derived from meta-xylylenediamine, 0.31 g [(the number of active hydrogens in the epoxy resin curing agent)/(the number of epoxy groups in the epoxy resin) = 5.0] of a polyfunctional epoxy resin ("jER828", available from Mitsubishi Chemical Corp., epoxy equivalent: 186 g/equivalent) having a glycidyloxy group derived from bisphenol A was used.

### Production Example 7 (Preparation of Epoxy Resin Composition F)

An epoxy resin composition F was prepared by the same method as Production Example 2 with the exception that in Production Example 2, the blending amount of the methanol used as a diluting solvent was changed to 2.40 g, the blending amount of the epoxy resin curing agent solution A obtained in Production Example 1 was changed to 2.40 g, and instead of the epoxy resin ("TETRAD-X", available from Mitsubishi Gas Chemical Co., Inc.) having a glycidylamino group derived from meta-xylylenediamine, 0.18 g [(the number of active hydrogens in the epoxy resin curing agent)/(the number of epoxy groups in the epoxy resin) = 5.0] of an epoxy resin ("TETRAD-C", available from Mitsubishi Gas Chemical Co., Inc.) having a glycidylamino group derived from 1,3-bis(aminomethyl)cyclohexane was used.

### Example 1 (Production and Evaluation of Oxygen Absorbent Material)

The epoxy resin composition A obtained in Production Example 2 was applied with a bar coater No. 8 onto an aluminum vapor-deposited surface of an aluminum vapor-deposited cast polypropylene (CPP) ("Chemilite S-F-1", available from Nakai Industrial Co., Ltd., thickness: 25 µm) having aluminum vapor-deposited onto one side of a cast polypropylene (CPP) film. The epoxy resin composition was then dried by heating at 80°C for 10 seconds (thickness after drying: 3 µm). A biaxially oriented polypropylene (OPP) film ("FOR" available from Futamura Chemical Co., Ltd., thickness: 20 µm) was affixed onto the dried epoxy resin composition by nip rollers and then heated at 40°C for two days to thereby obtain an oxygen absorbent material having the layer constitution described in Table 1.

The oxygen absorption amount was measured by the method described above using this oxygen absorbent material. In the measurement of the oxygen absorption amount, the moisture in the aluminum bag was adjusted by enclosing an absorbent cotton containing water in the bag. The results are presented in Table 1. In the following tables, "A/E" means (the number of active hydrogens in the epoxy resin curing agent)/(the number of epoxy groups in the epoxy resin).

### Examples 2 to 4

An oxygen absorbent material was produced by the same method as in Example 1 with the exception that the epoxy resin composition used in Example 1 was changed to the composition described in Table 1, and the oxygen absorption amount was measured by the method described above. The results are presented in Table 1.

### Comparative Example 1

An oxygen absorbent material was produced by the following method using a urethane adhesive in place of the epoxy resin composition A in Example 1. The urethane adhesive that was used was prepared by adding 0.8 g of a curing agent "CAT-RT37-0.8K" and 38.7 g of ethyl acetate as a solvent to 17 g of a primary agent "TM-569" and then stirring the mixture well.

The urethane adhesive was applied with a bar coater No. 12 onto the aluminum vapor-deposited surface of the aluminum vapor-deposited CPP, and then dried at 80°C for 10 seconds to thereby form an adhesive layer (thickness after drying: approximately 3 µm). The OPP film having a thickness of 20 µm was bonded onto the adhesive layer using nip rollers, and then heated for two days as 40°C, and an oxygen absorbent material having the layer constitution described in Table 1 was obtained.

The oxygen absorption amount was then measured by the same method described above using this oxygen absorbent material. In the measurement of the oxygen absorption amount, the moisture in the aluminum bag was adjusted by enclosing an absorbent cotton containing water in the bag. The results are presented in Table 1.

### [Table 1]

**Table 1**

| | Layer Constitution | | | | | | Storage Conditions | | Evaluation Results (Oxygen Absorption Amount) | | | | | | |
|---|---|---|---|---|---|---|---|---|---|---|---|---|---|---|---|
| | Base Material (IA) | Inorganic Layer (II) | Cured Product Layer | | | Base Material (IB) | Temperature | Humidity | Day 0 | Day 4 | Day 7 | Day 14 | Day 28 | Day 42 | Day 56 |
| | | | Composition | A/E | µm | | °C | %RH | cc/g | | | | | | |
| Example 1 | CPP 25 µm | Al vapor-deposited layer | Composition A | 0.8 | 3 | OPP 20 µm | 40 | 100 | 0 | 0.18 | 1.15 | 1.91 | 2.29 | 2.09 | 3.22 |
| Example 2 | | | Composition B | 1.2 | 3 | | 40 | 100 | 0 | 0.28 | 0.99 | 1.93 | 2.74 | 6.46 | 10.52 |
| Example 3 | | | Composition C | *5.0* | 3 | | 40 | 100 | 0 | 0.98 | 1.28 | 2.73 | 7.16 | 11.1 | 15.41 |
| Example 4 | | | Composition D | *5.0* | 1.2 | | 40 | 100 | 0 | - | 1.00 | 1.07 | 1.63 | 2.51 | 2.99 |
| Comparative Example 1 | | | Urethane | - | 3 | | 40 | 100 | 0 | 0 | 0.43 | 0.93 | 1.49 | 1.54 | 2.65 |

From Table 1, it is clear that the oxygen absorbent materials of the present invention exhibit a more excellent oxygen-absorbing property than that of the oxygen absorbent material of the comparative example. In addition, in a comparison of Examples 1 to 3, it is clear that when the ratio of (the number of active hydrogens in the epoxy resin curing agent)/(the number of epoxy groups in the epoxy resin) in the epoxy resin composition used for the cured product layer is in a range from 1.2 to 5.0, the oxygen absorption amount is further increased.

### Example 5

The epoxy resin composition A obtained in Production Example 2 was applied with a bar coater No. 8 onto an aluminum vapor-deposited surface of an aluminum vapor-deposited polyethylene terephthalate (PET) ("ML-PET", available from Mitsui Chemicals Tohcello, Inc., thickness: 12 µm) having aluminum vapor deposited onto one side of a PET film. The epoxy resin composition was then dried by heating at 80°C for 10 seconds (thickness after drying: 3 µm). A cast polypropylene (CPP) film ("P1146" available from Toyobo Co., Ltd., thickness: 50 µm) was affixed onto the dried epoxy resin composition by nip rollers and then heated at 40°C for two days to thereby obtain an oxygen absorbent material having the layer constitution described in Table 2.

The oxygen absorption amount was measured by the method described above using this oxygen absorbent material. In the measurement of the oxygen absorption amount, the moisture in the aluminum bag was adjusted by enclosing an absorbent cotton containing water in the bag. The results are presented in Table 2.

### Example 6

An oxygen absorbent material was produced by the same method as in Example 5 with the exception that the epoxy resin composition C obtained in Production Example 4 was used instead of the epoxy resin composition A used in Example 5, and the oxygen absorption amount was measured by the method described above. The results are presented in Table 2.

### Example 7

An oxygen absorbent material was produced by the same method as in Example 5 with the exception that an aluminum vapor-deposited oriented polypropylene (OPP) ("ML-OP102" available from Mitsui Chemicals Tohcello, Inc., thickness: 12 µm) having aluminum vapor deposited on one surface of an OPP film was used instead of the aluminum vapor-deposited PET used in Example 5, and the oxygen absorption amount was measured by the method described above. The results are presented in Table 2.

### Example 8

An oxygen absorbent material was produced by the same method as in Example 6 with the exception that the abovementioned aluminum vapor-deposited OPP was used instead of the aluminum vapor-deposited PET used in Example 6, and the oxygen absorption amount was measured by the method described above. The results are presented in Table 2.

### [Table 2]

**Table 2**

| | zLayer Constitution | | | | | | Storage Conditions | | Evaluation Results (Oxygen Absorption Amount) | | | | | |
|---|---|---|---|---|---|---|---|---|---|---|---|---|---|---|
| | Base Material (IA) | Inorganic Layer (II) | Cured Product Layer | | | Base Material (IB) | Temperature | Humidity | Day 0 | Day 4 | Day 7 | Day 28 | Day 42 | Day 56 |
| | | | Composition | A/E | µm | | °C | %RH | cc/g | | | | | |
| Example 1 | CPP 25 µm | Al vapor-deposited layer | Composition A | 0.8 | 3 | OPP 20 µm | 40 | 100 | 0 | 0.18 | 1.15 | 2.29 | 2.09 | 3.22 |
| Example 3 | | | Composition C | 5.0 | 3 | | 40 | 100 | 0 | 0.98 | 1.28 | 7.16 | 11.10 | 115.41 |
| Example 5 | PET 12 µm | Al vapor-deposited layer | Composition A | 0.8 | 3 | CPP 50 µm | 40 | 100 | 0 | - | 0.50 | 0.91 | 1.00 | 1.10 |
| Example 6 | | | Composition C | 5.0 | 3 | | 40 | 100 | 0 | - | 0.67 | 0.96 | 1.10 | 1.30 |
| Example 7 | OPP 12 µm | Al vapor-deposited layer | Composition A | 0.8 | 3 | CPP 50 µm | 40 | 100 | 0 | - | 0.79 | 1.85 | 1.65 | 2.86 |
| Example 8 | | | Composition C | 5.0 | 3 | | 40 | 100 | 0 | - | 0.96 | 2.01 | 2.37 | 2.85 |

### Example 9

The epoxy resin composition A obtained in Production Example 2 was applied with a bar coater No. 8 onto an alumina vapor-deposited surface of an alumina vapor-deposited polyethylene terephthalate (PET) film ("Barrialox 1011HG" available from Toray Advanced Film Co., Ltd., thickness: 12 µm) having alumina vapor-deposited onto one surface thereof a PET film. The epoxy resin composition was then dried by heating at 80°C for 10 seconds (thickness after drying: 3 µm). A cast polypropylene (CPP) film ("P1146" available from Toyobo Co., Ltd., thickness: 50 µm) was affixed onto the dried epoxy resin composition by nip rollers and then heated at 40°C for two days to thereby obtain an oxygen absorbent material having the layer constitution described in Table 3.

The oxygen absorption amount was measured by the method described above using this oxygen absorbent material. In the measurement of the oxygen absorption amount, the moisture in the aluminum bag was adjusted by enclosing an absorbent cotton containing water in the bag. The results are presented in Table 3.

### Example 10

An oxygen absorbent material was produced by the same method as in Example 9 with the exception that the epoxy resin composition C obtained in Production Example 4 was used instead of the epoxy resin composition A used in Example 9, and the oxygen absorption amount was measured by the method described above. The results are presented in Table 3.

### Example 11

An oxygen absorbent material was produced by the same method as in Example 9 with the exception that a silica vapor-deposited polyethylene terephthalate (PET) ("Techbarrier TCBL" available from the Mitsubishi Chemical Holdings Group, thickness: 12 µm) having silica vapor-deposited onto one surface of a PET film was used instead of the alumina vapor-deposited PET used in Example 9, and the oxygen absorption amount was measured by the method described above. The results are presented in Table 3.

### Example 12

An oxygen absorbent material was prepared by the same method as in Example 10 with the exception that the abovementioned silica vapor-deposited PET was used in place of the alumina vapor-deposited PET used in Example 10, and the oxygen absorption amount was measured by the method described above. The results are presented in Table 3.

### [Table 3]

**Table 3**

| | Layer Constitution | | | | | | Storage Conditions | | Evaluation Results (Oxygen Absorption Amount) | | | | | |
|---|---|---|---|---|---|---|---|---|---|---|---|---|---|---|
| | Base Material (IA) | Inorganic Layer (II) | Cured Product Layer | | | Base Material (IB) | Temperature | Humidity | Day 0 | Day 4 | Day 7 | Day 28 | Day 42 | Day 56 |
| | | | Composition | A/E | µm | | °C | %RH | cc/g | | | | | |
| Example 1 | CPP 25 µm | Al vapor-deposited layer | Composition A | 0.8 | 3 | OPP 20 µm | 40 | 100 | 0 | 0.18 | 1.15 | 2.29 | 2.09 | 3.22 |
| Example 3 | | | Composition C | 5.0 | 3 | | 40 | 100 | 0 | 0.98 | 1.28 | 7.16 | 11.10 | 15.41 |
| Example 9 | PET 12 µm | Al₂Ox vapor-deposited layer | Composition A | 0.8 | 3 | CPP 50 µm | 40 | 100 | 0 | 0 | 0.30 | 1.10 | 0.91 | 2.03 |
| Example 10 | | | Composition C | 5.0 | 3 | | 40 | 100 | 0 | 0 | 0.42 | *1.15* | 1.35 | 1.35 |
| Example 11 | PET 12 µm | SiOx vapor-deposited layer | Composition A | 0.8 | 3 | CPP 50 µm | 40 | 100 | 0 | - | 0.60 | 0.79 | 1.43 | 2.07 |
| Example 12 | | | Composition C | 5.0 | 3 | | 40 | 100 | 0 | - | 0.59 | 0.67 | 1.20 | 1.52 |

Table 2 describes examples in which the types of the base materials (IA) and (IB) constituting the oxygen absorbent material were changed, and Table 3 indicates examples in which the type of the inorganic layer (II) constituting the oxygen absorbent material was changed.

As is clear from the data in Table 2, with respect to the combinations of the base materials (IA) and (IB), the configurations of Examples 1 and 3 exhibited the largest increase in the oxygen absorption amount. In addition, as is clear from the data of Table 3, when the inorganic layer (II) was an aluminum vapor-deposited layer, the oxygen absorption amount was greater in comparison with the cases in which the inorganic layer (II) was an alumina vapor-deposited layer or a silica vapor-deposited layer.

### Example 13

The oxygen absorption amount was measured by the same method as in Example 1 with the exception that the storage temperature of the oxygen absorbent material in Example 1 was changed to 23°C. The results are presented in Table 4.

### Example 14

The oxygen absorption amount was measured by the same method as in Example 3 with the exception that the storage temperature of the oxygen absorbent material in Example 3 was changed to 23°C. The results are presented in Table 4.

### [Table 4]

**Table 4**

| | Layer Constitution | | | | | | Storage Conditions | | Evaluation Results (Oxygen Absorption Amount) | | | | | |
|---|---|---|---|---|---|---|---|---|---|---|---|---|---|---|
| | Base Material (IA) | Inorganic Layer (II) | Cured Product Layer | | | Base Material (IB) | Temperature | Humidity | Day 0 | Day 4 | Day 7 | Day 28 | Day 42 | Day 56 |
| | | | Composition | A/E | µm | | °C | %RH | cc/g | | | | | |
| Example 1 | CPP 25 µm | Al vapor-deposited layer | Composition A | 0.8 | 3 | OPP 20 µm | 40 | 100 | 0 | 0.18 | 1.15 | 2.29 | 2.09 | 3.22 |
| Example 3 | | | Composition C | 5.0 | 3 | | 40 | 100 | 0 | 0.98 | 1.28 | 7.16 | 11.10 | 15.41 |
| Example 13 | CPP 25 µm | Al vapor-deposited layer | Composition A | 0.8 | 3 | OPP 20 µm | 23 | 100 | 0 | - | 0.63 | 1.89 | 1.68 | 1.27 |
| Example 14 | | | Composition C | 5.0 | 3 | | 23 | 100 | 0 | - | 0.69 | 1.40 | 1.37 | 0.49 |

From Table 4, it is clear that the oxygen absorption amount increased more when the storage temperature of the oxygen absorbent material was 40°C than when the storage temperature was 23°C.

### Examples 15 to 20

Using the oxygen absorbent material prepared in Example 3, the oxygen absorption amount was measured in the same manner as in Example 3 with the exception that the humidity in the aluminum bag was adjusted to the humidity described in Table 5 using water and glycerin. The results are presented in Table 5.

### [Table 5]

**Table 5**

| | Layer Constitution | | | | | | Storage Conditions | | Evaluation Results (Oxygen Absorption Amount) | | | | | |
|---|---|---|---|---|---|---|---|---|---|---|---|---|---|---|
| | Base Material (IA) | Inorganic Layer (II) | Cured Product Layer | | | Base Material (IB) | Temperature | Humidity | Day 0 | Day 4 | Day 7 | Day 21 | Day 28 | Day 56 |
| | | | Composition | A/E | µm | | °C | %RH | cc/g | | | | | |
| Example 15 | CPP 25 µm | Al vapor-deposited layer | Composition C | 5.0 | 3 | OPP 20 µm | 40 | 40 | 0 | 0.65 | 0.65 | 0.46 | 0.60 | 0.45 |
| Example 16 | | | | | 3 | | 40 | 60 | 0 | 0.64 | 0.63 | 0.61 | 0.52 | 0.60 |
| Example 17 | | | | | 3 | | 40 | 80 | 0 | 0.64 | 0.71 | 0.61 | 0.60 | 0.60 |
| Example 18 | | | | | 3 | | 40 | 90 | 0 | 0.49 | 0.64 | 0.92 | 1.21 | 1.36 |
| Example 19 | | | | | 3 | | 40 | 95 | 0 | 0.48 | 0.95 | 1.06 | 1.34 | 1.56 |
| Example 20 | | | | | 3 | | 40 | 100 | 0 | 2.07 | 2.73 | 5.59 | 6.81 | 12.61 |

From Table 5, it is clear that the oxygen absorption amount increases as the humidity during storage of the oxygen absorbent material increases.

### Example 21

In Example 21, an aluminum foil was used as the inorganic layer (II).

The abovementioned urethane adhesive (prepared by adding 0.8 g of the curing agent CAT-RT37-0.8K and 38.7 g of ethyl acetate as a solvent to 17 g of the primary agent TM-569 and then stirring the mixture well) was applied with a bar coater No. 12 onto one surface of a polyethylene terephthalate film (thickness: 12 µm) and then dried at 80°C for 10 seconds to thereby form an adhesive layer (thickness after drying: 3 µm). An aluminum foil having a thickness of 7 µm was affixed on the adhesive layer using nip rollers. Next, the epoxy resin composition C obtained in Production Example 4 was applied with a bar coater No. 8 onto the aluminum foil and dried by heating at 80°C for 10 seconds (thickness after drying: 3 µm). A cast polypropylene (CPP) film ("P1146" available from Toyobo Co., Ltd., thickness: 50 µm) was affixed onto the dried epoxy resin composition C by nip rollers and then heated at 40°C for two days to thereby obtain an oxygen absorbent material having the layer constitution described in Table 6. The oxygen absorption amount was then measured by the method described above using this oxygen absorbent material. The results are presented in Table 6.

### [Table 6]

**Table 6**

| | Layer Constitution | | | | | | | Storage Conditions | | Evaluation Results (Oxygen Absorption Amount) | | | | | | | |
|---|---|---|---|---|---|---|---|---|---|---|---|---|---|---|---|---|---|
| | Base Material (IA) | Adhesive Layer | Inorganic Layer (II) | Cured Product Layer | | | Base Material (IB) | Temperature | Humidity | Day 0 | Day 4 | Day 7 | Day 14 | Day 21 | Day 28 | Day 42 | Day 56 |
| | | | | Composition | A/E | µm | | °C | %RH | cc/g | | | | | | | |
| Example 21 | PET 12 µm | Urethane | Al foil | Composition C | 5.0 | 3 | CPP 50 µm | 40 | 100 | 0 | 0.48 | 0.58 | 0.69 | 0.75 | 0.77 | 0.84 | 1.09 |

### Examples 22 and 23

An oxygen absorbent material was produced by the same method as in Example 3 with the exception that the epoxy resin composition used in Example 3 was changed to the composition described in Table 7, and the oxygen absorption amount was measured by the method described above. The results are presented in Table 7.

### [Table 7]

**Table 7**

| | Layer Constitution | | | | | | Storage Conditions | | Evaluation Results (Oxygen Absorption Amount) | | | | | | |
|---|---|---|---|---|---|---|---|---|---|---|---|---|---|---|---|
| | Base Material (IA) | Inorganic Layer (II) | Cured Product Layer | | | Base Material (IB) | Temperature | Humidity | Day 0 | Day 4 | Day 7 | Day 14 | Day 28 | Day 42 | Day 56 |
| | | | Composition | A/E | µm | | °C | %RH | cc/g | | | | | | |
| Example 3 | CPP 25 µm | Al vapor-deposited layer | Composition C | 5.0 | 3 | OPP 20 µm | 40 | 100 | 0 | 0.98 | 1.28 | 2.73 | 7.16 | 11.10 | 15.41 |
| Example 22 | | | Composition E | 5.0 | 3 | | 40 | 100 | 0 | 1.92 | 2.55 | 3.99 | 12.07 | 22.20 | 24.38 |
| Example 23 | | | Composition F | 5.0 | 3 | | 40 | 100 | 0 | 1.07 | 1.29 | 2.28 | 4.90 | 10.88 | 15.46 |

### Example 24 (Storage Method)

A white ink (obtained by two-fold diluting "Belle Color R115" available from Sakata Inx Corporation with a diluting solvent ("L solvent", available from Sakata Inx Corporation)) was applied with a bar coater No. 8 onto one side of a biaxially oriented polypropylene film (OPP) ("FOR", available from Futamura Chemical Co., Ltd.; thickness: 20 µm) and then heated and dried at 80°C for 10 seconds (thickness after drying: approximately 0.5 µm), and thereby a coloring layer was formed. A gravure ink for reverse printing (obtained by two-fold diluting "BelleFlora R Medium", available from Sakata Inx Corporation with a diluting solvent ("K solvent", available from Sakata Inx Corporation)) was applied with a bar coater No. 8 onto the obtained coloring layer and then heated at 80°C for 10 seconds to dry the gravure ink (thickness after drying: approximately 0.5 µm), and thereby a medium layer was formed.

The epoxy resin composition C obtained in Production Example 4 was applied with a bar coater No. 8 onto the medium layer and dried by heating at 80°C for 10 seconds (thickness after drying: approximately 3 µm). The surface coated with the epoxy resin composition and an aluminum vapor-deposited surface of an aluminum vapor-deposited cast polypropylene (CPP) ("Chemilite S-F-1", available from Nakai Industrial Co., Ltd., thickness: 25 µm) having aluminum vapor-deposited on one side of a CPP film were stacked and affixed by nip rollers, and then heated at 40°C for two days to thereby obtain an oxygen absorbent material having a constitution in which the CPP film (base material (IA)), the aluminum vapor-deposited layer (II), the cured product layer (III), the medium layer, the coloring layer, and the OPP film (base material (IB)) were laminated in this order.

The oxygen absorbent material was formed into a bag such that the base material (IA) side was on the inside, and a bag-shaped packaging material was thereby produced. The oxygen absorbent material constituting the packaging material had an oxygen transmission rate of 0.09 cc/(m²·day·atm). The oxygen transmission rate was measured by a below-described method.

A cut rice cake (FIG. 1(a), water activity Aw: 0.99) was inserted into the bag-shaped packaging material and sealed, and the packaging material was stored for two months in an environment having a temperature of 40°C and a relative humidity of 90%. The initial amount of oxygen in the packaging material was 10 cc, and the initial oxygen concentration in the packaging material was 20.8%. After storage for two months, the external appearance of the cut rice cake was visually observed, and no change was found in the external appearance (FIG. 1(b)).

### Measurement of Oxygen Transmission Rate

The oxygen transmission rate was measured using an oxygen transmission rate measuring device ("OX-TRAN 2/21" available from Modern Controls Inc.) under conditions including a temperature of 23°C and a relative humidity of 60%.

### Comparative Example 2

A cut rice cake was stored in the same manner as in Example 24 with the exception that the above-described urethane adhesive (prepared by adding 0.8 g of the curing agent CAT-RT37-0.8K and 38.7 g of ethyl acetate as a solvent to 17 g of the primary agent TM-569 and then stirring the mixture well) was used in place of the epoxy resin composition C obtained in Production Example 4 and used in Example 24. The oxygen absorbent material constituting the packaging material had an oxygen transmission rate of 2.7 cc/(m²·day·atm). After storage for two months, the external appearance of the cut rice cake was visually observed, and the generation of mold was observed (FIG. 1(c)).

### Comparative Example 3

The abovementioned urethane adhesive was applied with a bar coater No. 12 onto one side of an aluminum foil (thickness: 7 µm) and then dried at 80°C for 10 seconds, and thereby an adhesive layer (thickness after drying: 3 µm) was formed. A PET film ("E5100" available from Toyobo Co., Ltd., thickness: 12 µm) was affixed to the adhesive layer using nip rollers and then heated at 40°C for two days, and thereby a laminate film having a constitution in which the aluminum foil (II), the urethane adhesive layer, and the PET film were laminated in this order was obtained. The urethane adhesive was applied with a bar coater No. 12 onto the aluminum foil surface of the laminate film and then dried at 80°C for 10 seconds, and thereby an adhesive layer (thickness after drying: 3 µm) was formed. A cast polypropylene (CPP) film ("P1146" available from Toyobo Co., Ltd., thickness: 50 µm) was bonded on the obtained adhesive layer using nip rollers and then heated at 40°C for two days, and thereby a laminate having a constitution in which the CPP, the urethane adhesive layer, the aluminum foil (II), the urethane adhesive layer, and the PET film were laminated in this order was obtained. The laminate was formed into a bag such that the aluminum foil (II) side was on the inside, and a bag-shaped packaging material was thereby prepared. The laminate constituting the packaging material had an oxygen transmission rate of 0.01 cc/(m²•day•atm) or less.

A cut rice cake (FIG. 1(a)) was inserted into the bag-shaped packaging material and sealed, and the packaging material was stored for two months in an environment having a temperature of 40°C and a relative humidity of 90% in the same manner as in Example 24. The initial amount of oxygen in the packaging material was 10 cc, and the initial oxygen concentration in the packaging material was 20.8%. After storage for two months, the external appearance of the cut rice cake was visually observed, and the generation of mold was observed (FIG. 1(d)).

In Comparative Example 3, although a packaging material having a high oxygen barrier property was used, mold was generated in the cut rice cake, which was the content of the packaging material. The packaging material that was used did not exhibit an oxygen-absorbing property, and therefore the generation of this mold is thought to be due to the deterioration of the contents caused by residual oxygen in the packaging material.

### Example 25

The storage performance was evaluated in the same manner as in Example 24 with the exception that the article contained in the packaging material in Example 24 was changed to cheese-tara, which is a cheese product sandwiched between two cod sheets (FIG. 2(a), water activity Aw: 0.99). After storage for two months, the external appearance of the cheese-tara was visually observed, and no change in the external appearance was found (FIG. 2(b)).

### Comparative Example 4

The storage performance was evaluated in the same manner as in Comparative Example 2 with the exception that the article contained in the packaging material in Comparative Example 2 was changed to cheese-tara, which is a cheese product sandwiched between two cod sheets. After storage for two months, the external appearance of the cheese-tara was visually observed, and the generation of mold was observed (FIG. 2(c)).

### Comparative Example 5

The storage performance was evaluated in the same manner as in Comparative Example 3 with the exception that the article contained in the packaging material in Comparative Example 3 was changed to cheese-tara, which is a cheese product sandwiched between two cod sheets. After storage for two months, the external appearance of the cheese-tara was visually observed, and the generation of mold was observed (FIG. 2(d)).

### Industrial Applicability

According to the present invention, an oxygen absorbent material that is suited especially for storage of a hydrous article or for the storage of an article under a high-humidity environment, and a method for storing an article using the oxygen absorbent material can be provided.

## Claims

1. An oxygen absorbent material comprising:
a base material (I);
an inorganic layer (II); and
a cured product layer (III) of an epoxy resin composition comprising an epoxy resin and an epoxy resin curing agent, the epoxy resin curing agent comprising an amine-based curing agent, the inorganic layer (II) and the cured product layer (III) being adjacent to each other.

2. The oxygen absorbent material according to claim 1, wherein the amine-based curing agent comprises the following reaction product of a component (A) and a component (B):
(A) at least one selected from the group consisting of meta-xylylenediamine and para-xylylenediamine; and
(B) at least one selected from the group consisting of unsaturated carboxylic acids represented by the following General Formula (1) and derivatives thereof: 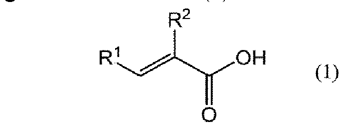 (in Formula (1), R¹ and R² each independently represent a hydrogen atom, an alkyl group having from 1 to 8 carbons, an aryl group having from 6 to 12 carbons, or an aralkyl group having from 7 to 13 carbons).

3. The oxygen absorbent material according to claim 1 or 2, wherein the inorganic layer (II) is an aluminum vapor-deposited layer.

4. The oxygen absorbent material according to any one of claims 1 to 3, wherein the base material (I) is a plastic film.

5. The oxygen absorbent material according to any one of claims 1 to 4, which comprises a base material (IA), the inorganic layer (II), the cured product layer (III), and a base material (IB) in this order.

6. The oxygen absorbent material according to claim 5, wherein the base material (IA) and the base material (IB) are base materials consisting of the same type of resin.

7. The oxygen absorbent material according to claim 6, wherein the base material (IA) and the base material (IB) are polypropylene films.

8. The oxygen absorbent material according to any one of claims 1 to 7, wherein in the epoxy resin composition, a ratio of the number of active hydrogens in the epoxy resin curing agent to the number of epoxy groups in the epoxy resin, that is, the ratio of (the number of active hydrogens in the epoxy resin curing agent)/(the number of epoxy groups in the epoxy resin), is in a range of from 0.2 to 8.0.

9. A method for storing an article using the oxygen absorbent material described in any one of claims 1 to 8, the method comprising the following aspect (1) and/or aspect (2):
(1) the article is accommodated in a packaging material in which the oxygen absorbent material is enclosed, and
(2) the article is accommodated in a packaging material at least partially comprising the oxygen absorbent material, the packaging material having an oxygen transmission rate of 1 cc/(m²·day·atm) or less.

10. The method according to claim 9, wherein a relative humidity in the packaging material is 85% or higher.

11. The method according to claim 9 or 10, wherein the packaging material in which the article is accommodated is stored in an environment having a relative humidity of 85% or higher.

12. The method according to any one of claims 9 to 11, wherein the article contains water.

13. Use of a laminate as an oxygen absorbent material, the laminate comprising:
a base material (I);
an inorganic layer (II); and
a cured product layer (III) of an epoxy resin composition comprising an epoxy resin and an epoxy resin curing agent, the epoxy resin curing agent comprising an amine-based curing agent, the inorganic layer (II) and the cured product layer (III) being adjacent to each other.
